# EUROPÄISCHE PATENTSCHRIFT

(11) **EP 2 106 006 B1**
(45) Veröffentlichungstag und Bekanntmachung des Hinweises auf die Patenterteilung: **16.09.2015**
(21) Anmeldenummer: 09003997.5
(22) Anmeldetag: 20.03.2009
(51) Int. Cl.: H02G 3/22, H02G 3/08

(54) **Kabeldurchführung**
Cable feedthrough
Passe-câble

(30) Priorität: 29.03.2008 DE 102008016256
(43) Veröffentlichungstag der Anmeldung: 30.09.2009
(73) Patentinhaber: ABB AG, 68309 Mannheim (DE)
(72) Erfinder: Roth, Michael, 77880 Sasbach (DE)

(56) Entgegenhaltungen:
- EP-A1- 1 744 425
- DE-A1- 19 731 448
- DE-A1-102006 028 144
- FR-A1- 2 126 194

## Beschreibung

Die Erfindung betrifft eine Kabeldurchführung für eine Gehäusewandung, welche in Form einer ebenen Tragplatte aus Isoliermaterial mit wenigstens einem als Sollbruchstelle vorgesehenen markierten Bereich gefertigt ist, der bedarfsweise als Kabeldurchgang dient, und an ihrem äußeren Rand mit einem umlaufenden Dichtflansch versehen ist, welche Kabeldurchführung an eine hierfür in einer Wand oder Zwischenwand, Decke oder einem Boden eines Verteilerschrankes, eines Verteilerkastens oder eines Zählerplatzes oder dergleichen vorgesehene Ausnehmung ansetzbar und beispielsweise durch rasten oder verschrauben fixierbar ist.

Kabeldurchführungen sind seit langem in der Elektroinstallationstechnik bekannt. Sie dienen hierbei als mechanischer Schutz für durch Gehäusewandungen hindurch geführte Kabel sowie auch als Fixierung des Kabels, um so eine zu vermeidende Zugbeanspruchung der jeweiligen Anschlusskontaktstellen des Kabels zu verhindern. Darüber hinaus können sie auch als fluiddichte Abdichtung ausgestaltet sein, die das Eindringen von Feuchtigkeit und/oder Verschmutzungen in das Innere des betreffenden elektrischen Gerätes verhindern sollen.

Neben Kabeldurchführungen für Einzelkabel, die entweder als einfache Schutztüllen aus Gummi oder elastischem Kunststoff oder mit aufwendiger Klemmverschraubung in hierfür vorgesehene Öffnungen in Gehäusen elektrischer Geräte eingesetzt sind, werden auch Kabeldurchführungen für eine Anzahl von verschiedenen Kabeln verwendet, die zumeist in Form einer ebenen Platte mit entsprechenden Durchbrüchen gefertigt sind, durch welche jeweils ein Kabel hindurch geführt ist.

Eine derartige Kabeldurchführung ist bekannt geworden aus der EP 0 676 093 B1, die eine plattenförmige Kabeldurchführung betrifft, die aus einem weichelastischen Werkstoff gefertigt ist, der bestimmte Eigenschaften aufweist, die für die vorgesehene Anwendung bedeutsam sind. Die Kabeldurchführung ist mit einer Vielzahl von zum Beispiel rasterartig angeordneten Sollbruchstellen versehen, welche bedarfsweise zur Durchführung eines oder mehrerer Kabel benutzt werden.

Bei allen bekannten derartigen Vielfach-Kabeldurchführungen besteht das Problem, dass die jeweiligen Durchgänge für die hindurchgeführten Kabel zwar eine ausreichende Abdichtung gewährleisten, nicht jedoch eine mechanische Fixierung des betreffenden Kabels, so dass generell die Gefahr einer unzulässigen Beanspruchung der jeweiligen Anschlußkontaktstelle eines jeden Kabels zu befürchten ist.

Das Dokument FR-A-2126194 beschreibt eine Kabeldurchführung nach dem Oberbegriff von Anspruch 1.

Ausgehend von diesem Stand der Technik ist es Aufgabe der Erfindung, eine Kabeldurchführung der eingangs genannten Art zu schaffen, die neben einer ausreichenden Abdichtung der Durchtrittsöffnung für jedes Kabel auch eine mechanische Fixierung aufweist, die auf einfache Weise ohne zusätzlichen Arbeits- beziehungsweise Montageaufwand gewährleistet.

Diese Aufgabe wird erfindungsgemäß gelöst durch die kennzeichnenden Merkmale des Anspruches 1 gelöst.

Demgemäß ist erfindungsgemäß vorgesehen, dass jedem markierten Bereich der Kabeldurchführung eine Vorrichtung zur Zugentlastung zugeordnet ist. Diese Vorrichtung zur Zugentlastung ist hierbei derart gestaltet, dass bereits beim Einführen eines Kabels in die betreffende Öffnung der Kabeldurchführung das Kabel selbsttätig von der Vorrichtung zur Zugentlastung beaufschlagt wird und auf diese Weise eine mechanische Fixierung erfährt.

Gemäß einer bevorzugten Ausführungsform der erfindungsgemäßen Kabeldurchführung sind auf der Tragplatte viele markierte Bereiche angeordnet, die mittels Stegen miteinander verbunden sind. Auf diese Weise wird eine Fläche vorgegebener Größe bestmöglich für die Einführung einer Vielzahl von Kabeln in ein mit der erfindungsgemäßen Kabeldurchführung versehenes Gehäuse eines elektrischen Gerätes beziehungsweise einer elektrischen Anlage genutzt.

Hierbei erweist es sich als äußerst vorteilhaft, dass erfindungsgemäß die Kabeldurchführung mit markierten Bereichen unterschiedlicher Größe für Kabel unterschiedlichen Durchmessers versehen ist.

In weiterer vorteilhafter Ausgestaltung der erfindungsgemäßen Kabeldurchführung ist die Vorrichtung zur Zugentlastung von paarweise einander zugeordneten Federbügeln gebildet, welche auf der der Außenseite abgewandten, so bezeichneten Innenseite der Kabeldurchführung und zwar um jeden als Kabeldurchgang vorgesehenen markierten Bereich konzentrisch angeordnet sind.

Entsprechend der Erfindung sind die paarweise einander zugeordneten Federbügel bevorzugterweise jeweils randnah, das heißt direkt am Rand oder in geringem Abstand zum Rand des vorgesehenen Kabeldurchgangs, an dem den jeweiligen Kabeldurchgang umgebenden Steg befestigt, wobei die freien Enden der Federbügel zueinander diametral gegenüberliegend ausgerichtet sind.

Eine weitere bevorzugte Ausführungsform der erfindungsgemäßen Kabeldurchführung ist dadurch gekennzeichnet, dass die Kabeldurchführung zweiteilig ausgeführt ist und aus einer ersten und einer zweiten Platte zusammengesetzt ist, wobei die erste und die zweite Platte formschlüssig miteinander zusammenarbeiten.

Hierbei besteht eine vorteilhafte Ausgestaltung der Erfindung darin, dass die erste Platte mit ihrer Vorderseite als Außenfläche der Kabeldurchführung dient und dass auf ihrer Rückseite die zweite Platte rastbar in die erste Platte eingesetzt ist.

Dabei ist ferner gemäß einer besonders günstigen Ausführungsvariante die erste Platte mit den markierten Bereichen für einen jeweiligen Kabeldurchgang versehen, während an der zweiten Platte entsprechend den durch die markierten Bereiche vorgegebenen Kabeldurchgängen Federbügel als Zugentlastung angeordnet sind.

Entsprechend einer bevorzugten Ausgestaltung der Erfindung ist die erste Platte mittels an sich bekannter 2K-Technik aus zwei Kunststoffen unterschiedlichen mechanischen Verhaltens gefertigt, nämlich aus einer Weichkomponente als elastische Außenhaut, die die Kabeldurchgänge ermöglicht und aus einer Hartkomponente, die quasi als Stützgerüst für die erste Platte die hierfür erforderliche Steifigkeit bietet. Hierbei erweist es sich als vorteilhaft, dass die erste Platte mittels 2-K-Spritzgußverfahren gefertigt ist, wodurch eine einfache Herstellung gewährleistet ist.

Die Weichkomponente erweist sich als besonders vorteilhaft für das Durchführen eines Kabels sowie für eine ausreichende Abdichtung, während die Hartkomponente als Traggerüst für die plattenförmige Kabeldurchführung dient.

Die zweite Platte, welche die erfindungsgemäße Zugentlastung für jeden Kabeldurchgang mittels der bereits genannten Federbügel bietet, ist aus einem mittelharten Kunststoff gefertigt, damit die als Zugentlastung dienenden Federbügel ein ausreichend biegesteifes Verhalten aufweisen bei gleichzeitig genügender Zähigkeit.

Ferner ist bei der zweiteilig ausgeführten Kabeldurchführung vorgesehen, dass die Federbügel am Rand jedes vorgesehenen Kabeldurchgangs mit dem den Kabeldurchgang umgebenden Steg der zweiten Platte verbunden sind.

Dabei können die Federbügel in Halterungen verrastet sein, die auf der der Außenseite abgewandten Oberfläche an der zweiten Platte angeformt sind, oder sie sind am Rand jedes vorgesehenen Kabeldurchgangs an dem dort den Kabeldurchgang umgebenden Steg angeformt, das heißt, dass die Federbügel am Rand jedes vorgesehenen Kabeldurchgangs einstückig mit dem den Kabeldurchgang umgebenden Steg der zweiten Platte verbunden sind, indem sie daran einstückig angeformt sind.

Entsprechend dem erfindungsgemäß vorgesehen Zweck einer Zugentlastung sind die Federbügel bevorzugt aus einem mittelharten Werkstoff gefertigt, damit sie neben ausreichender Elastizität für ein erfindungsgemäß vorgesehenes Anlegen an das jeweilige Kabel auch über die erforderliche Steifigkeit verfügen, die zur Fixierung des betreffenden Kabels erforderlich ist.

In erfindungsgemäßer Weiterbildung der Kabeldurchführung sind an jedem Kabeldurchgang je zwei paarweise diametral gegenüberliegend angeordnete Federbügel vorgesehen, die gleichförmig am Umfang des betreffenden Kabeldurchgangs verteilt angeformt sind.

Die Länge der Federbügel ist dabei so gewählt, dass zwischen den freien Enden ein Freiraum bleibt, der an die für diesen Kabeldurchgang vorgesehene Kabel angepasst ist, das heißt, dass entsprechend dieser Weiterbildung der erfindungsgemäßen Kabeldurchführung jeweils eine, zum Beispiel durch entsprechend vorgegebene Sollbruchstelle, vorbereitete Öffnung zum Einführen eines Kabels mit selbsttätiger Fixierung durch die eng sich an das Kabel anlegenden Haltebügel geschaffen ist.

In zweckmäßiger Ausgestaltung der erfindungsgemäßen Kabeldurchführung sind die Haltebügel derart geformt, dass die freien Enden der Federbügel einen Freiraum begrenzen, der kleiner ist als der Querschnitt des für diesen Kabeldurchgang vorgesehenen Kabels, was zur Folge hat, dass die Haltebügel beim Einführen eines dem Kabeldurchgang entsprechenden Kabels sich eng daran anlegen beziehungsweise in dessen Ummantelung sich einprägen und sich jedem Versuch, das Kabel zurückzuziehen, widersetzen.

Dementsprechend ist gemäß einer weiteren vorteilhaften Ausführungsform vorgesehen, dass die Federbügel aus der Ebene der Kabeldurchführung zur Innenseite hin abgewinkelt sind, das heißt, ihre Abwinkelung folgt der Einführrichtung des betreffenden Kabels, so dass zwangsläufig bei dieser erfindungsgemäß vorgesehenen Gestaltung das Zurückziehen des Kabels blockiert ist.

Vorzugsweise sind die die Federbügel in einem Winkel von 10° bis 45° abgewinkelt. Hierdurch ist sichergestellt, dass die freien Enden der Federbügel sich an ein in dem Kabeldurchgang befindliches Kabel federnd anlegen und insbesondere sich an das im Kabeldurchgang befindliche Kabel in dessen Ummantelung einpressen und so dessen Herausziehen verhindern.

Diese und weitere vorteilhafte Ausgestaltungen und Verbesserungen der Erfindung sind Gegenstand der Unteransprüche.

Anhand eines in der beigefügten Zeichnung dargestellten Ausführungsbeispieles der Erfindung sollen die Erfindung, vorteilhafte Ausgestaltungen und Verbesserungen der Erfindung sowie besondere Vorteile der Erfindung näher erläutert und beschrieben werden.

Es zeigen:
- Fig. 1: eine Draufsicht auf die nach innen, das heißt in das Schrank- beziehungsweise Gehäuseinnere, weisende Oberfläche einer erfindungsgemäßen Kabeldurchführung,
- Fig. 2: einen markierten Bereich mit daran angeordneten Haltebügeln im Querschnitt;
- Fig. 3: eine erste Platte in Schrägansicht von oben,
- Fig. 4: die erste und die zweite Platte miteinander verrastet in Schrägansicht von unten,
- Fig. 5: die erste und die zweite Platte jeweils in Schrägansicht von unten vor dem Zusammensetzen und
- Fig. 6: die erfindungsgemäße Kabeldurchführung mit zwei eingeführten Kabeln in Schrägansicht von unten.

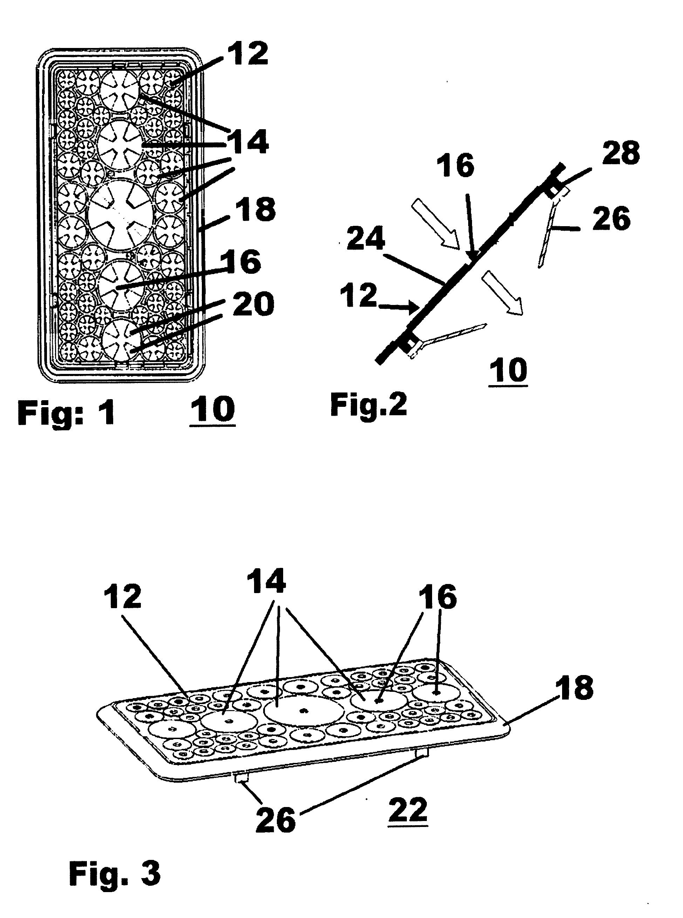

Fig. 1 zeigt eine erfindungsgemäße Kabeldurchführung 10 in Draufsicht auf ihre nach innen, das heißt in das Schrank- beziehungsweise Gehäuseinnere, weisende Oberfläche 12, das heißt ihre Innenseite. Die erfindungsgemäße Kabeldurchführung 10 ist zum Einbau beziehungsweise Einsetzen in eine hier nicht dargestellte Gehäusewandung vorgesehen und in Form einer ebenen Tragplatte aus Isoliermaterial, vorzugsweise Kunststoff, gefertigt. Wie später gezeigt werden wird, ist die Kabeldurchführung 10 aus zwei Einzelplatten, nämlich einer ersten Platte 22 und einer zweiten Platte 24, zusammengesetzt, wobei die erste Platte 22 in 2K-Technik aus zwei verschiedenen Kunststoffen gefertigt ist.

Die nach außen weisende Oberfläche 12 der Kabeldurchführung 10 ist als einheitliche ebene Fläche, vorzugsweise aus weichplastischem Material, ausgebildet, die mit markierten Bereichen 14 versehen ist, die dicht an dicht nebeneinander angeordnet sind und potentielle Kabeldurchgänge 16 markieren. Die zweite Komponente der ersten Platte 22, die der weichen Außenhaut als Stützgerüst dient, ist hier nicht näher gezeigt.

An ihrem äußeren Rand ist die Kabeldurchführung 10 mit einem umlaufenden flanschartigen Dichtrand 18 versehen, der aus weichelastischem Kunststoff besteht und beim Einbau beziehungsweise Einsetzen der Kabeldurchführung 10 in eine hierfür in einer Wand oder Zwischenwand, Decke oder einem Boden eines Verteilerschrankes, eines Verteilerkastens oder eines Zählerplatzes oder dergleichen vorgesehene Ausnehmung sich an die die Ausnehmung umgebende Wand anschmiegt.

In Fig. 2 ist ein markierter Bereich 14 der zweiten Platte 24 mit daran angeordneten federnden Haltebügeln 20 im Querschnitt dargestellt. Die Haltebügel 20 sind jeweils mindestens paarweise einem jeden vorgesehenen Kabeldurchgang 16 zugeordnet und dienen dazu, ein durch den Kabeldurchgang 16 hindurch geführtes Kabel 34 (Richtung der eingetragenen Pfeile) zu fixieren, das heißt, gegen ein Herausziehen aus dem Kabeldurchgang 16 zu blockieren.

Dies wird dadurch erreicht, dass die Haltebügel 20 federnd als Laschen ausgebildet am Rand des betreffenden Kabeldurchgangs 16 diametral einander gegenüberliegend angeordnet sind und hierbei in Einführrichtung unter einem kleinen Winkel von etwa 10° bis 45° abgewinkelt sind. Die Länge jedes Federbügels 20 ist hierbei so bemessen, dass ein durch den betreffenden Kabeldurchgang 16 geführtes Kabel 34 in jedem Fall von beiden Bügeln 20 eines Federbügelpaares erfasst wird.

Da die Haltebügel 20 also bereits in Richtung eines eingeführten Kabels 34 abgewinkelt sind und sich so an ein in den betreffenden Kabeldurchgang 16 eingeführtes Kabel 34 federnd anlegen, wird abhängig von dessen Dicke der Anstellwinkel der Haltebügel 20 und damit deren Anpresskraft an das betreffende Kabel 34 gegebenenfalls erhöht.

Bei einem Zurückziehen des Kabels 34 in Ausziehrichtung folgen die Haltebügel 20 dieser Bewegung in Richtung entsprechend der Ruhestellung der Haltebügel 20, wobei diese sich hierbei in das Kabel 34 einprägen. Der Widerstand gegen das Herausziehen des Kabels 34 erhöht sich schließlich derart, dass das Kabel 34 blockiert ist. Bei einer weiteren Erhöhung der Ausziehkraft würde das Kabel 34 Schaden nehmen oder die Federbügel 20 würden deformiert werden oder gar brechen.

Fig. 3 zeigt eine erste Platte 22 in Schrägansicht von oben. In dieser Darstellung sind die unterschiedlich großen markierten Bereiche 14, die nebeneinander positioniert sind, gut als kreisförmige Flächen zu erkennen mit in jedem markierten Bereich 14 vorgesehenen Kabeldurchgängen 16, die jeweils als kleine Einformung im Sinne einer Sollbruchstelle beziehungsweise als Ausnehmung 16 dargestellt sind, die beim Einführen eines der betreffenden Größe entsprechenden Kabels 34 jeweils gleichförmig nachgibt und sich daran anschmiegt.

Darüber hinaus ist die erste Platte 22 mit dem bereits erwähnten Dichtrand 18 versehen, der sich an die Wand der jeweils vorgesehenen Einbaustelle dichtend anlegt. Auf jeder Längsseite der ersten Platte 22 sind zusätzlich Rastfedern 28 vorgesehen, die mit Führungslappen 26 der zweiten Platte zusammen arbeiten. Sie greifen in die Gehäuseausnehmung ein und verrasten darin, wie später erläutert wird.

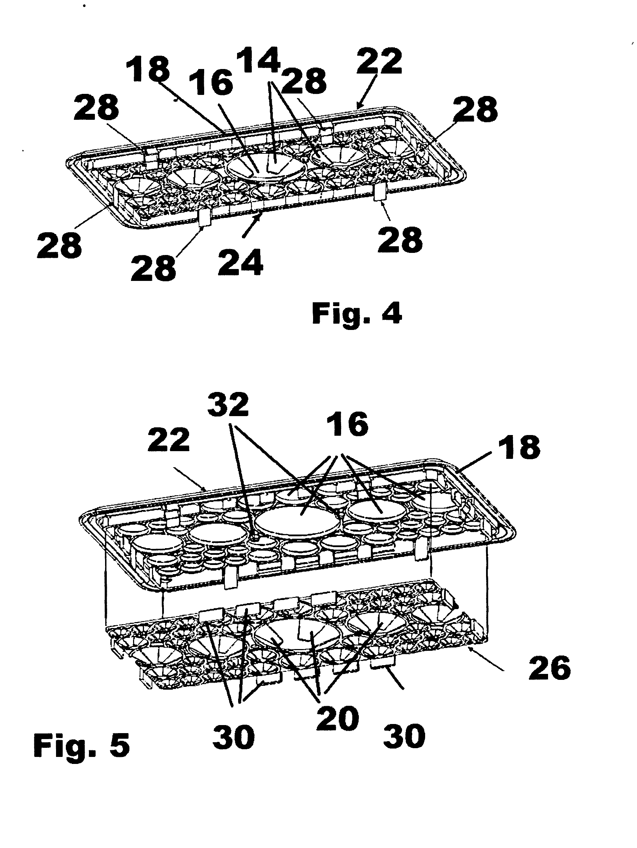

Fig. 4 zeigt die erste Platte und zwei verrastet in Schrägansicht von unten. In dieser Darstellung sind insbesondere die mit den markierten Bereichen 14 in der ersten Platte 20 korrespondierenden Kabeldurchgängen 16 erkennbar, an deren Rand hier jeweils vier Federbügel 20 gleichförmig über den Umfang verteilt angeordnet sind.

Darüber hinaus sind inmitten der zweiten Platte 24, das heißt auf deren Mittellängsachse zwei Befestigungsnocken 30 angeordnet, die beim Zusammensetzen der ersten Platte 22 und der zweiten Platte 24 mit entsprechenden, in der ersten Platte 22 vorgesehenen Aufnahmeöffnungen 31 korrespondieren und darin formschlüssig verrasten, so dass beide Platten 22, 24 quasi unlösbar miteinander verbunden sind.

Ferner sind am Rand der zweiten Platte 24 die zuvor bereits erwähnten Rastfedern 28 angeformt, welche in die zugehörige Ausnehmung in der Montagefläche, zum Beispiel eines Verteilerschrankes, eingreifen.

In Fig. 5 sind die erste Platte 22 und die zweite Platte 24 jeweils in Schrägansicht von unten unmittelbar vor dem Zusammensetzen dargestellt. Hilfslinien, entlang denen das parallele Verschieben beider Platten 11, 12 aufeinander zu erfolgt, verbinden die zueinander gehörigen Bereiche beider Platten 22, 24. Dementsprechend werden beide Platten 22, 24 aufeinander zu bewegt und anschließendes zusammengepresst, so dass die Rastnocken 30 in entsprechende Aufnahmeöffnungen 31 einrasten und beide Platten 22, 24 dauerhaft miteinander verbinden.

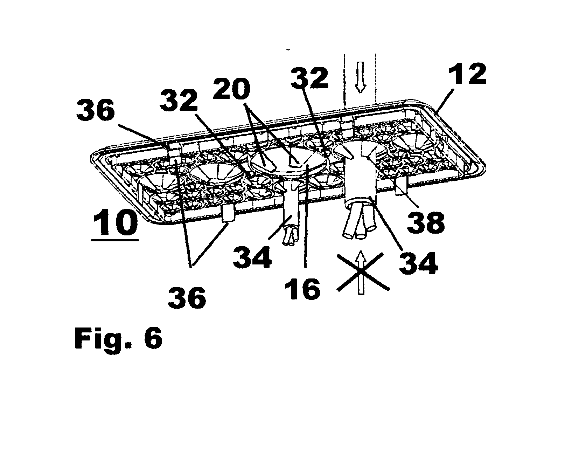

Fig. 6 schließlich zeigt die erfindungsgemäße Kabeldurchführung 10 mit zwei eingeführten Kabeln 34 in Schrägansicht von unten, um die Funktionsweise der Kabeldurchführung 10 zu verdeutlichen.

Darüber hinaus sind Rasthaken 36 an den Längsunterseiten der Kabeldurchführung 10 angeformt, die zur Befestigung der Kabeldurchführung 10 an der jeweils vorgesehen Ausnehmung in der betreffenden Wandung dienen, indem sie die Wand, in welcher die Ausnehmung angeordnet ist, hintergreifen und so die betriebsbereite Kabeldurchführung 10 gegen ein ungewolltes Entfernen sichern. Vorzugsweise sind die Rasthaken 36 einstückig an die Rastfedern 28 angeformt.

Auch ist zu erkennen, dass verschiedene Kabel 34 mit unterschiedlicher Dicke in Kabeldurchgänge 10 unterschiedlicher lichter Weite eingeführt werden entsprechend den in Fig. 3 deutlich erkennbaren markierten Bereichen 14 verschiedenen Durchmessers.

Ferner ist in Fig. 6 einerseits mit einem oberen Pfeil die Einführrichtung für die Kabel angezeigt, in welche Kabel quasi ungehindert eingeführt werden können, und mit einem unteren entgegen gerichteten Pfeil, der mit einem X durchkreuzt ist und damit anzeigen soll, dass eine Bewegung in diese Ausziehrichtung blockiert ist.

Ergänzend ist noch darauf hinzuweisen, dass die zweiteilige, das heißt aus der ersten Platte 22 und der zweiten Platte 24 zusammengesetzte, Kabeldurchführung 10 ihrer Funktion entsprechend aus zwei verschiedenen Werkstoffen gefertigt ist.

Die erste Komponente des 2K-Materials der ersten Platte ist ein weicheleastisches gummiähnliches Material, vorzugsweise Silikon-Kautschuk oder Acrylnitril-Butadien-Kautschuk. Dies ist wichtig für die vorgesehene Gestaltung der nach außen weisenden Oberfläche der ersten Platte 22, die als weichelastische Außenhaut gefertigt ist. Die zweite Komponente der ersten Platte, welche dem weichelastischen Material als Stützgerüst dient, besteht vorzugsweise aus einem harten Kunststoff, wie er aus der 2K-Technik hinlänglich bekannt ist.

Hingegen besteht die zweite Platte 24 aus einem mittelharten Kunststoff, der in seiner Elastizität auf die Federwirkung der Kabeldurchführung abgestimmt ist, zum Beispiel Polystyrol, halbhartes Polyethylen oder Polycarbonat. Die materialeigene Flexibilität gepaart mit der konstruktiven Gestaltung, nämlich der Anordnung von Federbügeln am Rand der Kreiselemente unterschiedlicher Größe, unterstützen die Steifigkeit der zweiten Platte 24 zusätzlich. Damit trägt diese ebenfalls zur Stabilität der erfindungsgemäßen Kabeldurchführung 10 bei.

### Bezugszeichenliste

- 10: Kabeldurchführung
- 12: Außenseite
- 14: markierter Bereich
- 16: Kabeldurchgang
- 18: Dichtrand, Flansch
- 20: Haltebügel, Federbügel
- 22: erste Platte
- 24: zweite Platte
- 26: Führungslaschen
- 28: Rastfeder
- 30: Befestigungsnoppen, Rastnocken
- 31: Aufnahmeöffnung
- 32: Rasthaken
- 34: Kabel
- 36: Rastkante

## Patentansprüche

1. Kabeldurchführung (10) für eine Gehäusewandung, welche in Form einer ebenen Tragplatte aus einem Isoliermaterial, vorzugsweise Kunststoff, mit wenigstens einem als Sollbruchstelle vorgesehenen markierten Bereich (14) gefertigt ist, der bedarfsweise als Kabeldurchgang 16) dient, und an ihrem äußeren Rand mit einem umlaufenden Dichtflansch (18) versehen ist, die an eine hierfür in einer Wand oder Zwischenwand, Decke oder einem Boden eines Verteilerschrankes, eines Verteilerkastens oder eines Zählerplatzes oder dergleichen vorgesehene Ausnehmung ansetzbar und fixierbar ist,
**dadurch gekennzeichnet, dass**
jedem markierten Bereich eine Vorrichtung zur Zugentlastung (20) zugeordnet ist.

2. Kabeldurchführung nach Anspruch 1, **dadurch gekennzeichnet, dass** auf der Tragplatte (10) viele markierte Bereiche (14) angeordnet sind, die mittels Stegen miteinander verbunden sind.

3. Kabeldurchführung nach einem der Ansprüche 1 oder 2, **dadurch gekennzeichnet, dass** die markierten Bereiche (14) unterschiedliche Größe haben und für Kabel unterschiedlichen Durchmessers vorgesehen sind.

4. Kabeldurchführung nach einem der vorherigen Ansprüche, **dadurch gekennzeichnet, dass** die Vorrichtung zur Zugentlastung von paarweise einander zugeordneten Federbügeln (20) gebildet ist, welche auf der der Außenseite abgewandten Innenseite um den als Kabeldurchgang (16) vorgesehenen markierten Bereich (14) angeordnet sind.

5. Kabeldurchführung nach einem der vorherigen Ansprüche, **dadurch gekennzeichnet, dass** die Federbügel (20) am Rand des vorgesehenen Kabeldurchgangs (16) einstückig mit dem den Kabeldurchgang (16) umgebenden Steg verbunden sind.

6. Kabeldurchführung nach einem der vorherigen Ansprüche, **dadurch gekennzeichnet, dass** die Kabeldurchführung (10) zweiteilig ausgeführt ist und aus einer ersten Platte (22) und einer zweiten Platte (24) zusammengesetzt ist.

7. Kabeldurchführung nach Anspruch 6, **dadurch gekennzeichnet, dass** die erste Platte (22) mit den markierten Bereichen (14) für einen jeweiligen Kabeldurchgang (16) versehen ist und dass an der zweiten Platte 16) entsprechend den durch die markierten Bereiche (14) vorgegebenen Kabeldurchgängen 16) Federbügel (20) angeordnet sind.

8. Kabeldurchführung nach einem der vorherigen Ansprüche, **dadurch gekennzeichnet, dass** an jedem Kabeldurchgang (16) je zwei paarweise diametral gegenüberliegend angeordnete Federbügel 20) vorgesehen sind.

9. Kabeldurchführung nach einem der vorherigen Ansprüche, **dadurch gekennzeichnet, dass** die Federbügel (20) gleichförmig am Umfang des betreffenden Kabeldurchgangs (16) verteilt angeformt sind.

10. Kabeldurchführung nach einem der vorherigen Ansprüche, **dadurch gekennzeichnet, dass** die Länge der Federbügel (20) so gewählt ist, dass zwischen den freien Enden ein Freiraum bleibt, der an die für diesen Kabeldurchgang (16) vorgesehene Kabel (34) angepasst ist.

11. Kabeldurchführung nach einem der vorherigen Ansprüche, **dadurch gekennzeichnet, dass** die freien Enden der Federbügel (20) einen Freiraum begrenzen, der kleiner ist als der Querschnitt der für diesen Kabeldurchgang (16) vorgesehenen Kabels (34), wobei die Federbügel (20) aus der Ebene der Kabeldurchführung (10) zur Innenseite des betreffenden Kabeldurchgangs (16) hin konisch abgewinkelt sind.

12. Kabeldurchführung nach einem der vorherigen Ansprüche, **dadurch gekennzeichnet, dass** die freien Enden der Federbügel (20) sich an ein in dem Kabeldurchgang (16) befindliches Kabel (34) federnd anlegen, sich an das im Kabeldurchgang (16) befindliche Kabel (34) einpressen und so dessen Herausziehen verhindern.

14. Kabeldurchführung nach einem der Ansprüche 6 bis 11, **dadurch gekennzeichnet, dass** die erste Platte (22) als Zweikomponentenerzeugnis mit einer Weichkomponente aus weichelastischem Material und mit einer Hartkomponente aus einem Hartkunststoff gefertigt ist und die zweite Platte (24) aus einem mittelharten Kunststoff besteht, wobei die Weichkomponente sich als günstig erweist für das Durchführen eines Kabels sowie für eine ausreichende Abdichtung und die Hartkomponente als Traggerüst für die Weichkomponente, während die Werkstoffwahl für die zweite Platte (24) im Hinblick auf die erforderliche Rückstellkraft der Federbügel (20) zur Zugentlastung der plattenförmige Kabeldurchführung (10) getroffen ist.

15. Kabeldurchführung nach einem der Ansprüche 7 bis 11, **dadurch gekennzeichnet, dass** die erste Platte (22) mittels 2-K-Spritzgußverfahren und die zweite Platte (24) aus einem mittelharten Kunststoff mittels eines konventionellen Spritzgießverfahrens gefertigt sind.

## Claims

1. Cable feedthrough (10) for a housing wall, which is produced from an insulating material, preferably plastic, in the form of a flat supporting plate with at least one marked area (14) provided as a predetermined breaking point and serving as and when required as a cable passage (16) and which is provided at its outer border with a peripheral sealing flange (18), which can be placed and fixed against a recess provided for this in a wall or intermediate wall, top or bottom of a distribution cabinet, a distribution box or a meter mounting board or the like, **characterized in that** each marked area is assigned a device for strain relief (20).

2. Cable feedthrough according to Claim 1, **characterized in that** multiple marked areas (14), connected to one another by means of lands, are arranged on the supporting plate (10).

3. Cable feedthrough according to either of Claims 1 and 2, **characterized in that** the marked areas (14) have different sizes and are intended for cables of different diameters.

4. Cable feedthrough according to one of the preceding claims, **characterized in that** the device for strain relief is formed by resilient tabs (20) which are assigned to one another in pairs and are arranged around the marked area (14) intended as a cable passage (16), on the inner side facing away from the outer side.

5. Cable feedthrough according to one of the preceding claims, **characterized in that**, at the border of the cable passage (16) provided, the resilient tabs (20) are integrally connected to the land surrounding the cable passage (16).

6. Cable feedthrough according to one of the preceding claims, **characterized in that** the cable feedthrough (10) is of a two-part design and is made up of a first plate (22) and a second plate (24).

7. Cable feedthrough according to Claim 6, **characterized in that** the first plate (22) is provided with the marked areas (14) for a respective cable passage (16) and **in that** resilient tabs (20) are arranged on the second plate (24) in a way corresponding to the cable passages (16) predefined by the marked areas (14).

8. Cable feedthrough according to one of the preceding claims, **characterized in that** two resilient tabs (20) arranged lying diametrically opposite one another in pairs are provided at each cable passage (16).

9. Cable feedthrough according to one of the preceding claims, **characterized in that** the resilient tabs (20) are formed on in a uniformly distributed manner around the circumference of the cable passage (16) concerned.

10. Cable feedthrough according to one of the preceding claims, **characterized in that** the length of the resilient tabs (20) is chosen such that between the free ends there remains a clearance, which is adapted to the cables (34) intended for this cable passage (16).

11. Cable feedthrough according to one of the preceding claims, **characterized in that** the free ends of the resilient tabs (20) bound a clearance that is smaller than the cross section of the cable (34) intended for this cable passage (16), the resilient tabs (20) being angled away out of the plane of the cable feedthrough (10) conically towards the inner side of the cable passage (16) concerned.

12. Cable feedthrough according to one of the preceding claims, **characterized in that** the free ends of the resilient tabs (20) come to bear resiliently against a cable (34) located in the cable passage (16), press against the cable (34) located in the cable passage (16) and thus prevent it from being pulled out.

13. Cable feedthrough according to one of Claims 6 to 11, **characterized in that** the first plate (22) is produced as a two-component product with a soft component of soft-elastic material and with a hard component of a hard plastic, and the second plate (24) consists of a medium-hard plastic, the soft component proving to be favourable for the feeding through of a cable and for sufficient sealing and the hard component proving to be favourable as a supporting structure for the soft component, while the choice of material for the second plate (24) is made with a view to the required restoring force of the resilient tabs (20) for the strain relief of the cable feedthrough (10) in plate form.

14. Cable feedthrough according to one of Claims 7 to 11, **characterized in that** the first plate (22) is produced by means of a 2-component injection-moulding process and the second plate (24) is produced from a medium-hard plastic by means of a conventional injection-moulding process.

## Revendications

1. Traversée de câble (10) pour une paroi de boîtier, laquelle est fabriquée sous la forme d'une plaque porteuse plane en un matériau isolant, de préférence une matière plastique, comprenant au moins une zone marquée (14) prévue en tant que point de rupture voulu, laquelle sert au besoin de passage de câble (16), et est munie sur son bord extérieur d'une bride d'étanchéité (18) circonférentielle, laquelle paroi de boîtier qui peut être apposée et fixée sur un évidement prévu à cet effet dans une paroi ou une paroi intermédiaire, un dessus ou un fond d'une armoire de distribution, d'un coffret de distribution ou d'un poste de compteur ou similaire, **caractérisée en ce qu'**un dispositif antitraction (20) est associé à chaque zone marquée.

2. Traversée de câble selon la revendication 1, **caractérisée en ce que** de nombreuses zones marquées (14) sont disposées sur la plaque porteuse (10), lesquelles sont reliées entre elles au moyen de nervures.

3. Traversée de câble selon l'une des revendications 1 ou 2, **caractérisée en ce que** les zones marquées (14) possèdent des tailles différentes et sont prévues pour des câbles de différents diamètres.

4. Traversée de câble selon l'une des revendications précédentes, **caractérisée en ce que** le dispositif antitraction est constitué d'étriers à ressort (20) associés les uns aux autres par paires, lesquels sont disposés sur le côté intérieur à l'opposé du côté extérieur autour de la zone marquée (14) prévue en tant que passage de câble (16).

5. Traversée de câble selon l'une des revendications précédentes, **caractérisée en ce que** les étriers à ressort (20), au bord du passage de câble (16) prévu, sont reliés d'une seule pièce avec la nervure qui entoure le passage de câble (16).

6. Traversée de câble selon l'une des revendications précédentes, **caractérisée en ce que** la traversée de câble (10) est réalisée en deux parties et se compose d'une première plaque (22) et d'une deuxième plaque (24).

7. Traversée de câble selon la revendication 6, **caractérisée en ce que** la première plaque (22) est munie des zones marquées (14) pour un passage de câble (16) correspondant et **en ce que** des étriers à ressort (20) sont montés sur la deuxième plaque (24) en correspondance avec les passages de câble (16) prédéfinis par les zones marquées (14).

8. Traversée de câble selon l'une des revendications précédentes, **caractérisée en ce que** deux étriers à ressort (20) montés diamétralement opposés par paires se trouvent respectivement à chaque passage de câble (16).

9. Traversée de câble selon l'une des revendications précédentes, **caractérisée en ce que** les étriers à ressort (20) sont façonnés de manière répartie uniformément sur le pourtour du passage de câble (16) concerné.

10. Traversée de câble selon l'une des revendications précédentes, **caractérisée en ce que** la longueur des étriers à ressort (20) est choisie de telle sorte qu'il subsiste entre les extrémités libres un espace libre qui est adapté aux câbles (34) prévus pour ce passage de câble (16).

11. Traversée de câble selon l'une des revendications précédentes, **caractérisée en ce que** les extrémités libres des étriers à ressort (20) délimitent un espace libre qui est inférieur à la section transversale du câble (34) prévu pour ce passage de câble (16), les étriers à ressort (20) étant coudés de manière conique depuis le plan de la traversée de câble (10) en direction du côté intérieur du passage de câble (16) concerné.

12. Traversée de câble selon l'une des revendications précédentes, **caractérisée en ce que** les extrémités libres des étriers à ressort (20) reposent avec effet ressort sur un câble (34) qui se trouve dans le passage de câble (16), sont comprimées contre le câble (34) qui se trouve dans le passage de câble (16) et empêchent ainsi son extraction.

13. Traversée de câble selon l'une des revendications 6 à 11, **caractérisée en ce que** la première plaque (22) est fabriquée sous la forme d'un produit à deux composantes comprenant une composante souple en matériau élastique souple et comprenant une composante dure en une matière plastique dure et la deuxième plaque (24) se compose d'une matière plastique moyennement dure, la composante souple s'avérant appropriée pour la traversée d'un câble ainsi que pour une étanchéité suffisante et la composante dure en tant que structure porteuse pour la composante souple, alors que le choix du matériau pour la deuxième plaque (24) s'effectue dans la perspective de la force de retenue nécessaire des étriers à ressort (20) pour la fonction d'antitraction de la traversée de câble (10) en forme de plaque.

14. Traversée de câble selon l'une des revendications 7 à 11, **caractérisée en ce que** la première plaque (22) est fabriquée par procédé de moulage par injection de deux composantes et la deuxième plaque (24) à partir d'une matière plastique moyennement dure au moyen d'un procédé de moulage par injection conventionnel.
